# EUROPÄISCHE PATENTSCHRIFT

(11) **EP 3 164 437 B1**
(45) Veröffentlichungstag und Bekanntmachung des Hinweises auf die Patenterteilung: **18.11.2020**
(21) Anmeldenummer: 15717929.2
(22) Anmeldetag: 28.04.2015
(51) Int. Cl.: C08G 18/66, C08G 18/79, C08G 18/10, C08G 18/42, C08G 18/44

(54) **ZWEIKOMPONENTEN-BESCHICHTUNGSZUSAMMENSETZUNGEN UND DARAUS HERGESTELLTE BESCHICHTUNGEN ZUR VERBESSERUNG DER EROSIONSBESTÄNDIGKEIT**
TWO COMPONENT COATING COMPOSITIONS AND COATINGS PRODUCED FROM THE SAME FOR IMPROVED EROSION RESISTANCE
COMPOSITIONS DE REVÊTEMENT BI-COMPOSANTS ET REVÊTEMENTS AINSI FABRIQUÉS DESTINÉS À AMÉLIORER LA RÉSISTANCE À L'ÉROSION

(30) Priorität: 02.07.2014 EP 14175353
(43) Veröffentlichungstag der Anmeldung: 10.05.2017
(73) Patentinhaber: Akzo Nobel Coatings International B.V., 6824 BM Arnhem (NL)
(72) Erfinder: HOHNHOLZ, Dieter, 27243 Groß Ippener (DE); SEEGER, Dirk, 26125 Oldenburg (DE); PIECHA, Christoph, 26935 Stadland (DE)
(74) Vertreter: Akzo Nobel IP Department
(86) Internationale Anmeldenummer: PCT/EP2015/059191
(87) Internationale Veröffentlichungsnummer: WO 2016/000845

(56) Entgegenhaltungen:
- WO-A1-98/25986
- WO-A1-2010/090186
- WO-A2-2013/006606
- US-A1- 2005 288 431
- US-B1- 6 251 988

## Beschreibung

Die vorliegende Erfindung betrifft Zweikomponenten-Beschichtungszusammensetzungen sowie daraus hergestellte Beschichtungen. Die vorliegende Erfindung betrifft auch ein Verfahren zur Herstellung dieser Beschichtungen sowie die Verwendung der Beschichtungszusammensetzung zur Herstellung von Beschichtungen. Nicht zuletzt betrifft die vorliegende Erfindung die Verwendung der Beschichtungszusammensetzungen zur Verbesserung der Erosionsbeständigkeit.

### Stand der Technik

In verschiedenen Einsatzbereichen besteht ein Bedarf an Beschichtungen, die hohen mechanischen Ansprüchen genügen. Beispielhaft zu nennen sind hier Oberflächen von Objekten, die hinsichtlich der Umgebungsbedingungen hohen Geschwindigkeiten bei gleichzeitiger Belastung durch erodierende Stoffe, beispielsweise Feststoffe oder Flüssigkeiten, ausgesetzt sind. Eine erodierende Belastung erfahren also grundsätzlich Objekte, die einerseits selbst bewegt werden, und andererseits dem Einfluss erodierende Stoffe ausgesetzt sind. Insbesondere zu nennen sind Rotorblätter von Windenergieanlagen oder Hubschraubern und Schiffsschrauben, Luft- und Landfahrzeuge (wie beispielsweise Flugzeuge, Schienenfahrzeuge, Automobile) und Schiffe.

Grundsätzlich können Erosionen hervorgerufen werden durch flüssige oder feste Stoffe, die selbst oder dispers beziehungsweise gelöst in einem anderen gasförmigen oder flüssigen Medium (beispielsweise Luft oder Wasser) vorliegen und durch dieses Medium bewegt werden (beispielsweise Flugsand, Regen und/oder Hagel). Beim Auftreffen auf Objekte beziehungsweise deren Oberflächen wird auf diese eine erodierende Kraft ausgeübt. Beispiele dafür sind die Erosion durch Regen oder Flugsand an Rotorblättern oder im Bereich der Vorflügel von Flugzeugen. Besonders stark sind die erodierenden Einflüsse im Bereich von Kanten der entsprechenden Objekte.

Generell besteht die Möglichkeit, den Verschleißschutz, das heißt insbesondere die Erosionsbeständigkeit, von Objekten durch Beschichtungen der Oberflächen der Objekte zu steuern. Um eine gute Erosionsbeständigkeit zu erhalten, ist bekanntermaßen ein genau abgestimmtes Verhältnis von Flexibilität beziehungsweise Elastizität der Beschichtung einerseits und andererseits der Härte der Beschichtung wichtig. Eine zu hohe Härte beziehungsweise eine zu geringe Elastizität sind einer guten Erosionsbeständigkeit eher abträglich.

Eine Möglichkeit, die Erosionsbeständigkeit zu erhöhen, ist die Erhöhung der Schichtdicken von Beschichtungen. Dies ist aus Gewichtsgründen jedoch in vielen Anwendungen, beispielsweise im Flugzeugbau oder Rotorblattbau von Windenergieanlagen, nicht erstrebenswert.

Weiterhin können Harze mit aromatischen Harzbestandteilen wie beispielsweise Epoxidharze in den Beschichtungszusammensetzungen, auf denen die Beschichtungen basieren, eingesetzt werden. Aufgrund der aromatischen Molekülbestandteile weisen die resultierenden Beschichtungen eine hohe Verschleißfestigkeit auf, besitzen jedoch eine deutlich eingeschränkte UV-Beständigkeit.

Darüber hinaus können Beschichtungszusammensetzungen eingesetzt werden, die Harze enthalten, mit denen licht- oder temperaturinduziert hohe Vernetzungsdichten erzielt werden können. Beispielsweise können UV-Harze (über radikalische oder ionische Polymerisation) oder bestimmte hochreaktive Polyadditionsharze eingesetzt werden. Mit diesen Bindemittelklassen kann ebenfalls die Verschleißbeständigkeit verbessert werden, jedoch gibt es limitierende Faktoren bei der Verwendung auf Großbauteilen wie Rotorblättern oder Flugzeugbauteilen. So besteht bei Formulierungen aus beispielsweise UV-Harzen eine begrenzte Pigmentauswahl, da diese Absorptionsmaxima in Aushärtungswellenlängen aufweisen können und die Schichtdicken in Abhängigkeit von der Pigmentierungshöhe limitiert sind. Weiterhin ergeben sich anlagentechnische Herausforderungen der Sauerstoffinhibierung der UV-Initiatoren. Bei der Verwendung von temperaturinduzierten Lacken (das heißt insbesondere allgemein bekannten Einkomponenten-Lacken) besteht vor allem die Limitierung hinsichtlich der Einbrenntemperaturen im Bezug zur Anlagendimensionierung bei Großbauteilen.

Aus der internationalen Patentanmeldung WO 2010/122157 sind erosionsbeständige Polyurethanbeschichtungen bekannt, die unter Einsatz von aliphatischen Polyesterpolyolen und einer Isocyanatkomponente, beispielsweise Polylactonmodifizierten Isocyanat-Präpolymeren oder Uretdionverbindungen, hergestellt werden. In der WO 2012/032113 A1 werden Zwei-Komponenten-Erosionsschutzbeschichtungszusammensetzungen auf Basis einer Polyolkomponente und einer mit Isocyanatgruppen terminierten Polylacton-Komponente offenbart, die zur Herstellung von Beschichtungen auf Rotorblättern eingesetzt werden können. WO2013006606 offenbart eine durch freie Radikale härtbare Glasbeschichtungszusammensetzung auf Wasserbasis.

Auch wenn die so hergestellten Beschichtungen eine bereits verbesserte Erosionsbeständigkeit haben, ist insbesondere im Hinblick auf aktuelle Herausforderungen beispielsweise im Rotorblattbau von Windenergieanlagen, insbesondere bezüglich windreicher Standorte (Offshore) und hoher Blattgeschwindigkeiten im Betrieb, sowie im Flugzeugbau (Gewichtsverringerung bei gleicher oder besserer Performance) eine weitere Verbesserung wünschenswert.

### Aufgabe

Der vorliegenden Erfindung lag daher die Aufgabe zugrunde, die zuvor beschriebenen Nachteile des Standes der Technik zu beseitigen. Es sollten Beschichtungszusammensetzungen zur Verfügung gestellt werden, die zur Herstellung von Erosionsschutzbeschichtungen eingesetzt werden können, die eine deutlich verbesserte Erosionsbeständigkeit aufweisen als Erosionsschutzbeschichtungen des Standes der Technik. Dabei sollten die Beschichtungszusammensetzungen einfach herstellbar und auch bei großen Bauteilen wie Rotorblättern von Windenergieanlagen oder Flugzeugen einfach zu verwenden sein, das heißt insbesondere ohne den Einsatz von UV-Initiatoren und/oder hohen Temperaturen zu Beschichtungen verarbeitbar sein.

### Lösung

Demgemäß wurde eine Zweikomponenten-Beschichtungszusammensetzung gefunden, umfassend
(1) eine Stammlackkomponente umfassend
   (A) mindestens ein Polycarbonatdiol,
   (B) mindestens ein sekundäre Aminogruppen aufweisendes Diamin mit einer aliphatischen Gruppe (b1) zwischen den Stickstoffatomen der Aminogruppen sowie
(2) eine Härterkomponente umfassend
   (C) mindestens einen Polyisocyanat-modifizierten Polyester mit einem Isocyanatgehalt von 4 bis 15 %.

Die neue Zweikomponenten-Beschichtungszusammensetzung ist Gegenstand der vorliegenden Erfindung und wird in der Folge auch als erfindungsgemäße Beschichtungszusammensetzung bezeichnet. Bevorzugte Ausführungsformen gehen aus der folgenden Beschreibung und den Unteransprüchen hervor.

Gegenstand der vorliegenden Erfindung ist auch ein Verfahren zur Herstellung von Beschichtungen unter Einsatz der erfindungsgemäßen Beschichtungszusammensetzung sowie eine Beschichtung, die aus der Beschichtungszusammensetzung hergestellt wurde. Gegenstand der Erfindung ist auch die Verwendung der Beschichtungszusammensetzung zur Verbesserung der Erosionsbeständigkeit.

Die mittels der erfindungsgemäße Beschichtungszusammensetzung lässt sich einfach zu Beschichtungen verarbeiten. Die hergestellten Beschichtungen weisen insbesondere eine ausgezeichnete Erosionsbeständigkeit auf. Die Beschichtungszusammensetzung beziehungsweise die Beschichtungen eignen sich somit ideal für Substrate, die starken erodierende Einflüssen ausgesetzt sind, beispielsweise Rotorblättern oder Substraten im Flugzeugbau.

### Beschreibung der Erfindung

Die erfindungsgemäße Beschichtungszusammensetzung ist eine Zweikomponenten-Beschichtungszusammensetzung. Dies bedeutet bekanntermaßen, dass im Rahmen der vorliegenden Erfindung die wie unten beschriebene Komponente (1) (Stammlackkomponente) und die wie unten beschriebene Komponente (2) (Härterkomponente) getrennt voneinander hergestellt und gelagert werden und erst kurz vor der Applikation zusammengegeben werden. Die Verarbeitungszeit beziehungsweise Topfzeit (das heißt die Zeit, in der die erfindungsgemäße Beschichtungszusammensetzung bei Raumtemperatur (15 bis 25°C, insbesondere 20°C) verarbeitet werden kann, ohne dass beispielsweise durch entsprechende Vernetzungsreaktionen bei Raumtemperatur eine so starke Viskositätserhöhung auftritt, dass keine Applikation mehr möglich ist), ist bekanntermaßen abhängig von den eingesetzten Bestandteilen, insbesondere von den weiter unten beschriebenen Polycarbonatdiolen (A), Diaminen (B) und dem Polyisocyanat-modifizierten Polyester (C). Insbesondere beträgt die Verarbeitungszeit der Beschichtungszusammensetzung aber mindestens 0,1 min bis zu 10 min, bevorzugt mindestens 0,5 min bis zu 5 min. Der Vorteil eines solchen Zweikomponenten-Beschichtungszusammensetzung liegt vor allem darin, dass auch bei großen Bauteilen wie Rotorblättern von Windenergieanlagen oder Flugzeugen eine einfache Verarbeitung möglich ist, insbesondere keine hohen Temperaturen zur Härtung notwendig sind. Bevorzugt wird das erfindungsgemäße Beschichtungsmittel nach dem Aufbringen auf ein Substrat bei nicht mehr als 80°C, bevorzugt nicht mehr als 60°C, insbesondere bevorzugt bei 15 bis 60°C gehärtet.

Unter Härtung ist das dem Fachmann bekannte Vorgehen zu verstehen, das heißt die Überführung einer als Schicht auf ein Substrat aufgebrachten Beschichtungszusammensetzung in den gebrauchsfertigen Zustand, das heißt also in einen Zustand, in der das mit der jeweiligen Beschichtung ausgestattete Substrat transportiert, gelagert und bestimmungsgemäß verwendet werden kann. Diese Härtung erfolgt insbesondere durch chemische Reaktion von reaktiven funktionellen Gruppen der enthaltenen Komponenten, die als Bindemittelbestandteile in dem Beschichtungsmittel enthalten sind. Insbesondere zu nennen ist damit im Rahmen der vorliegenden Erfindung die Reaktion der Hydroxylgruppen des Polycarbonats (A) sowie der Aminogruppen des Diamins (B) mit den Isocyanatgruppen des Polyisocyanat-modifizierten Polyesters (C). Durch diese Vernetzungsreaktionen und die parallel erfolgende Evaporation von gegebenenfalls vorhandenen Lösemitteln wird ein Beschichtungsfilm gebildet, das heißt es wird eine gehärtete Beschichtungsschicht (gehärtete Beschichtung) hergestellt. Die Aktivierung der Reaktionen ist durch thermische Energie möglich, wobei im vorliegenden Fall aber der beschriebene Vorteil der nicht notwendigen hohen Temperaturen besteht. Unter dem Begriff Bindemittel beziehungsweise Bindemittelbestandteil wird hierin entsprechend der einschlägigen DIN EN ISO 4618 der nichtflüchtige Anteil eines Beschichtungsstoffs ohne Pigmente und Füllstoffe verstanden. Spezielle Bindemittelbestandteile sind in diesem Sinne somit neben den Komponenten (A) und (B) auch die Komponente (C) (die auch als Härter oder Vernetzungsmittel bezeichnet werden kann) oder auch lacktypische Additive sowie alle anderen nichtflüchtigen Bestandteile, außer den Pigmenten und Füllstoffen. Schon der Übersichtlichkeit halber wird der Begriff Bindemittel aber hauptsächlich in Bezug auf die vornehmlich für die Filmbildung verantwortlichen Komponenten der Stammlackkomponente (1) verwendet, das heißt insbesondere die Komponenten (A) und (B). Die Komponente (C) wird entsprechend vornehmlich als Härter oder auch Vernetzungsmittel bezeichnet.

Die Zweikomponenten-Beschichtungszusammensetzung enthält mindestens ein Polycarbonatdiol (A) in der Stammlackkomponente (1).

Polycarbonatdiole sind formal betrachtet Veresterungsprodukte, die durch Umsetzung von Kohlensäure mit Polyolen entstehen können. In der Praxis werden die Carbonatstrukturen bekanntermaßen mit Hilfe von Phosgen oder Kohlensäurediestern unter gängigen Reaktionsbedingungen eingeführt. Die Umsetzung mit Diolen, beispielsweise mit 3-Methyl-1,5-pentandiol oder 1,6-Hexandiol, führt dann zu den Polycarbonatdiolen. Selbstverständlich können solche Polycarbonatdiole neben den die Ausgangskomponenten verbindenden Carbonatfunktionen anteilig auch weitere funktionelle Gruppen wie Ester- oder Ethergruppen enthalten, je nach Art und Menge der eingesetzten Ausgangsverbindungen. Vorzugsweise handelt es sich bei dem Polycarbonatdiol um ein lineares Polycarbonatdiol. Bevorzugt sind die Hydroxylgruppen endständig, das heißt an beiden Enden des bevorzugt linearen Polycarbonatdiols angeordnet (hydroxyl-terminiertes Polycarbonatdiol). Ganz besonders bevorzugt handelt es sich um ein aliphatisches Polycarbonatdiol. Das Polycarbonatdiol enthält also bevorzugt keine aromatischen Gruppen, da diese eine deutlich eingeschränkte UV-Beständigkeit aufweisen.

Bevorzugt besitzen die Polycarbonatdiole (A), insbesondere die linearen, aliphatischen Polycarbonatdiole, eine OH-Zahl von 50 bis 500 mg KOH/g, bevorzugt 100 bis 400 mg KOH/g, insbesondere 150 bis 250 mg KOH/g (gemessen nach DIN 53240). Wird im Rahmen der vorliegenden Erfindung auf eine offizielle Norm verwiesen, ist hiermit selbstverständlich die zum Anmeldetag geltende Fassung der Norm oder, falls zu diesem Zeitpunkt keine geltende Fassung besteht, die letzte geltende Fassung gemeint.

Da es sich bei den Polycarbonaten (A) um diolische Komponenten handelt, sind die OH-Zahl und das zahlenmittlere Molekulargewicht der Komponenten voneinander abhängig beziehungsweise die angegebene OH-Zahl lässt Rückschlüsse auf das zahlenmittlere Molekulargewicht zu. Ein hohes zahlenmittleres Molekulargewicht würde mit einer eher niedrigen OH-Zahl einhergehen. Das zahlenmittlere Molekulargewicht kann breit variieren und liegt im Bereich von beispielsweise 220 g/mol bis 2250 g/mol (gemessen mittels GPC-Analyse mit THF (+0,1% Essigsäure) als Eluent (1 ml/min) auf einer Styrol-Divinylbenzol-Säulenkombination, Kalibrierung mit Polystyrol-Standards).

Geeignete Polycarbonatdiole (A) werden beispielsweise unter der Produktlinie DURANOL™ (Fa. Asahi Kasei), Desmophen® von der Firma Bayer MaterialScience AG (Leverkusen, Deutschland) oder Eternacoll® (UBE) angeboten.

Der Anteil der Polycarbonate (A) liegt vorzugsweise im Bereich von 10 bis 90 Gew.-%, bevorzugt 15 bis 70 Gew.-%, besonders bevorzugt 20 bis 50 Gew.-%, jeweils bezogen auf das Gesamtgewicht der erfindungsgemäßen Beschichtungszusammensetzung.

Die Zweikomponenten-Beschichtungszusammensetzung enthält in der Stammlackkomponente (1) mindestens ein sekundäre Aminogruppen aufweisendes Diamin (B) mit einer aliphatischen Gruppe (b1) zwischen den Stickstoffatomen der Aminogruppen. Insbesondere durch den Zusatz des Diamins und dessen Kombination mit einem Polycarbonatdiol (A) sowie einem Polyisocyanat-modifizierten Polyester (C) resultiert eine Beschichtungszusammensetzung, durch deren Einsatz Beschichtungen mit stark verbesserter Erosionsbeständigkeit erhalten werden.

Das Diamin weist als funktionelle Gruppen jedenfalls sekundäre Aminogruppen auf. Demnach enthält es ausschließlich sekundäre Aminogruppen, nämlich genau zwei sekundäre Aminogruppen.

Sekundäre Aminogruppen besitzen bekanntermaßen genau einen Wasserstoffrest am Stickstoffatom. Zudem sind zwei entsprechende organische Reste (beziehungsweise organische Gruppen) R₁ und R₂ vorhanden, welche über ein Kohlenstoffatom an den Stickstoff gebunden sind. Diese organischen Reste R₁ und R₂ können dann letztlich beliebig gewählt sein, solange der Charakter als Amin erhalten bleibt. Beispielsweise möglich sind Alkylgruppen, Arylgruppen und Alkenylgruppen, welche auch substituiert sein können, das heißt anstelle von an Kohlenstoff gebundenem Wasserstoff an diesen Positionen unterschiedliche weitere funktionelle Gruppen wie Hydroxylgruppen oder Nitrilgruppen enthalten können. Nicht möglich wäre bekanntermaßen eine Acylgruppe in alpha-Stellung zum Stickstoffatom, da dann ein Amid und kein Amin vorhanden wäre.

In den organischen Resten R₁ und R₂ einer sekundären Aminogruppe können selbstverständlich auch verbrückende Heteroatome beziehungsweise verbrückende Gruppen enthaltend Heteroatome enthalten sein, solange der Charakter als Amin bewahrt bleibt. Beispielhaft seien Etherbindungen oder Esterbindungen genannt.

Ein wie beschriebener organischer Rest R₁ oder R₂ kann natürlich auch zwischen zwei Stickstoffatomen von zwei Aminogruppen angeordnet sein. In einem dann beispielsweise bestehenden Diamin stellt dieser Rest dann einen organischen Rest für beide Aminogruppen dar. Dies ist beispielsweise in dem erfindungsgemäß einzusetzenden Diamin (B) für den Rest (b1) der Fall.

Zwischen den Stickstoffatomen der sekundären Aminogruppen des Diamins ist eine aliphatische Gruppe (b1) angeordnet.

Aliphatische Verbindungen sind bekanntermaßen acyclische oder cyclische, gesättigte oder ungesättigte Kohlenstoffwasserstoffverbindungen, die nicht aromatisch sind beziehungsweise keinerlei aromatische Anteile enthalten. Der Begriff aliphatische Verbindung umfasst also acyclische und cyclische Aliphaten (Cycloaliphaten) und gilt auch im Rahmen der vorliegenden Erfindung als entsprechender Oberbegriff. Die acyclischen Aliphaten können linear oder verzweigt sein. Linear bedeutet in diesem Zusammenhang bekanntermaßen, dass die jeweilige Verbindung keine Verzweigungen hinsichtlich der Kohlenstoffkette aufweist, sondern die Kohlenstoffatome ausschließlich in linearer Abfolge in einer Kette angeordnet sind. Verzweigt beziehungsweise nichtlinear bedeutet damit im Rahmen der vorliegenden Erfindung, dass die jeweils betrachtete Verbindung eine Verzweigung in der Kohlenstoffkette aufweist, das heißt also anders als bei den linearen Verbindungen mindestens ein Kohlenstoffatom der jeweiligen Verbindung ein tertiäres oder quartäres Kohlenstoffatom ist. Als cyclische Aliphaten beziehungsweise Cycloaliphaten werden solche Verbindungen bezeichnet, in denen zumindest ein Teil der vorhandenen Kohlenstoffatome im Molekül so verknüpft sind, dass einer oder mehrere Ringe ausgebildet werden. Natürlich können neben dem einen oder den mehreren Ringen weitere acyclische lineare oder verzweigte aliphatische Gruppen in einem Cycloaliphaten vorhanden sein.

Eine aliphatische Gruppe (beziehungsweise ein aliphatischer Rest, die Begriffe Gruppe und Rest werden äquivalent verwendet) ist demzufolge eine Gruppe, die die oben für die aliphatischen Verbindungen genannten Voraussetzungen erfüllt, jedoch nur ein Teil eines Moleküls ist. So ist die (offensichtliche zweibindige) aliphatische Gruppe (b1) zwischen den Stickstoffatomen der Aminogruppen in dem Diamin (B) offensichtlich nur ein Teil des Gesamtmoleküls. Zusätzlich sind die Stickstoffatome sowie die beiden weiteren organischen Reste der beiden sekundären Aminogruppen vorhanden.

Beispiele für aliphatische Gruppen sind lineare, verzweigte oder cyclische Alkylgruppen.

Bevorzugt sind die aliphatischen Gruppen (b1) gesättigt. Dabei kann es sich dann um gesättigte acyclische und cyclische aliphatische Gruppen handeln. Die aliphatischen Gruppen (b1) besitzen bevorzugt 4 bis 30 Kohlenstoffatome, insbesondere 6 bis 18 Kohlenstoffatome. Besonders bevorzugt sind cyclische aliphatische Gruppen (b1), insbesondere solche mit 6 bis 18 Kohlenstoffatomen. Ein ganz besonders bevorzugter aliphatischer Rest (b1) hat die folgende Formel (I).

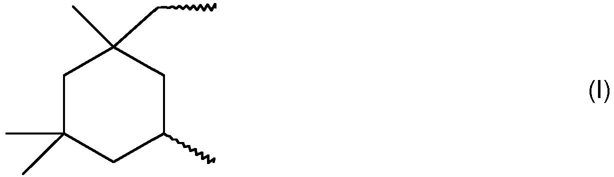

Dieser Rest lässt sich bei einer wie unten beschriebenen Herstellung des Diamins (B) durch den Einsatz des entsprechenden primären Diamins Isophorondiamin einführen.

An beide Stickstoffatome des Diamins (B) ist neben dem zweibindigen Rest (b1) und dem jeweils vorhandenen Wasserstoff noch jeweils ein weiterer organischer Rest (b2) angebunden. Diese Reste können, unabhängig voneinander, an sich beliebig gewählt sein, solange der Charakter als Amin erhalten bleibt. Es kann sich demnach um gegebenenfalls substituierte aliphatische, aromatische oder araliphatische Reste beziehungsweise Gruppen handeln. Eine araliphatische Gruppe ist eine Gruppe mit sowohl aliphatischen als auch aromatischen Anteilen. Bevorzugt sind die Reste (b2) nicht aromatisch beziehungsweise enthalten keine aromatischen Anteile. Insbesondere bevorzugt sind die Amine (B) also vollständig frei von jeglichen aromatischen Gruppen beziehungsweise Anteilen.

Bevorzugt handelt es sich bei den Resten (b2) um gegebenenfalls substituierte Alkylgruppen. Ein Beispiel für eine nicht substituierte Alkylgruppe ist eine Methyl- oder eine Ethylgruppe. Ein Beispiel für eine substituierte Alkylgruppe ist eine Ethylgruppe, in der ein Wasserstoffatom durch eine Nitrilgruppe substituiert ist. Beispielsweise sei der Rest -CH₂CH₂-CN genannt. Ein weiteres Beispiel wäre ein Alkylrest, der über eine Esterbindung mit einem weiteren Alkylrest verbunden ist. Beispielhaft sei der substituierte Rest -CH₂CH₂-C(O)-O-CH₃ genannt. Die gegebenenfalls substituierten Alkylgruppen enthalten bevorzugt 2 bis 10, insbesondere 2 bis 4 Kohlenstoffatome in Alkyleinheiten. Beispielsweise der Rest -CH₂CH₂-CN enthält zwei Kohlenstoffatome in Alkyleinheiten. Der Rest -CH₂CH₂-C(O)-O-CH₃ enthält drei solche Kohlenstoffatome, denn ein Kohlenstoffatom liegt nicht in einer Alkyleinheit, sondern in einer Esterbindung vor.

Die Diamine (B) können auf wie weiter unten noch genauer beschriebene einfache und effiziente Weise durch die Umsetzung von primären Diaminen (enthaltend zwei primäre Aminogruppen sowie eine dazwischen angeordnete aliphatische Gruppe (b1)) mit Acrylsäurederivaten durch an sich bekannte nukleophile Addition des Amins an die Kohlenstoff-Kohlenstoff-Doppelbindung der Acrylgruppe des Acrylsäurederivats hergestellt werden. Bekanntermaßen muss zur Realisierung einer solchen nukleophilen Umsetzung ein möglichst effektiver elektronenziehender Effekt auf die Kohlenstoff-Kohlenstoff-Doppelbindung bewirkt werden. Dies gelingt durch den Einsatz von insbesondere Acrylnitril oder Acrylsäureestern, insbesondere C₁-C₆-Alkylsäureestern, bevorzugt Methylacrylat und Ethylacrylat. Ganz besonders bevorzugt ist Acrylnitril.

Aus oben Gesagtem folgt, dass die Reste (b2) bevorzugt ausgewählt werden aus der Gruppe bestehend aus -CH₂CH₂-CN sowie -CH₂CH₂-C(O)-O-CₙH₂ₙ₊₁ mit n = 1 bis 6, bevorzugt n = 1 bis 2. Denn genau diese Reste (b2) resultieren, wenn man bei der nukleophilen Addition die bevorzugten Acrylsäurederivate eingesetzt werden. Ganz besonders bevorzugt ist der Rest -CH₂CH₂-CN.

Besonders bevorzugte Diamine (B) lassen sich also durch die folgende Formel (II) beschreiben:

(b2)-NH-(b1)-NH-(b2) (II)

mit
(b1) = aliphatische Gruppe mit 4 bis 30 Kohlenstoffatomen, insbesondere bevorzugt cyclische aliphatische Gruppe mit 6 bis 18 Kohlenstoffatomen, ganz besonders bevorzugt aliphatische Gruppe der Formel (I),
(b2) = unabhängig voneinander, -CH₂CH₂-CN und/oder -CH₂CH₂-C(O)-O-CₙH₂ₙ₊₁ mit n = 1 bis 6, bevorzugt -CH₂CH₂-CN.

Die Diamine (B) haben bevorzugt eine Aminzahl von 300 bis 500 mg KOH/g, insbesondere von 350 bis 450 mg KOH/g (gemessen mittels DIN EN ISO 15880).

Da es sich bei den Diaminen (B) um Komponenten mit genau zwei Aminogruppen handelt, sind die Aminzahl und das Molekulargewicht der Komponenten voneinander abhängig beziehungsweise die angegebene Aminzahl lässt Rückschlüsse auf das Molekulargewicht zu. Ein hohes Molekulargewicht würde mit einer eher niedrigen Aminzahl einhergehen.

Die Herstellung der Diamine (B) kann auf an sich bekannte Weise verlaufen, beispielsweise durch nukleophile Addition von zwei Äquivalenten Acrylsäurederivat an ein Äquivalent Diamin mit zwei primären Aminogruppen. Eine solche Herstellung wird beispielsweise in der Offenlegungsschrift WO 2007/031534 A1 beschrieben.

Bevorzugt erfolgt die Herstellung des Diamins (B) also über die nukleophile Addition von Acrylderivaten an primäre Diamine. Dabei werden bevorzugt die oben genannten Acrylderivate eingesetzt, nämlich Acrylnitril und/oder Acrylsäureester, insbesondere C₁-C₆-Alkylsäureester. Die primären Diamine werden bevorzugt so ausgewählt, dass das Diamin (B) nach der Umsetzung die oben genannten bevorzugten aliphatischen Gruppen (b1) enthält. Beispielhaft seien als Amine genannt: Isophorondiamin, 3,3'-Dimethyl-4,4'diaminodicyclohexylmethan, 4,4'-Diaminodicyclohexylmethan, 4,4'-Diaminodiphenylmethan, Hexamethylendiamin und 2-Methylpentamethylendiamin. Bevorzugt sind also Isophorondiamin, 3,3'-Dimethyl-4,4'diaminodicyclohexylmethan, 4,4'-Diaminodicyclohexylmethan, Hexamethylendiamin und 2-Methylpentamethylendiamin. Ganz besonders bevorzugt sind die genannten cycloaliphatischen primären Diamine, insbesondere Isophorondiamin. Dieses primäre Diamin enthält augenscheinlich den ganz besonders bevorzugten Rest (b1) der Formel (I).

Der Anteil der Diamine (B) liegt vorzugsweise im Bereich von 0,7 bis 9,0 Gew.-%, bevorzugt 1,0 bis 7,0 Gew.-%, besonders bevorzugt 1,4 bis 5,0 Gew.-%, jeweils bezogen auf das Gesamtgewicht der erfindungsgemäßen Beschichtungszusammensetzung.

Die Zweikomponenten-Beschichtungszusammensetzung enthält, und zwar in der Härterkomponente (2), mindestens einen Polyisocyanat-modifizierten Polyester (C) mit einem Isocyanatgehalt von 4 bis 15 %.

Polyester sind bekannt. Es handelt sich um polymere Harze, die durch Umsetzung mehrwertiger organischer Polyole und mehrwertiger organischer Carbonsäuren hergestellt werden. Die Polyole und Polycarbonsäuren werden dabei durch Veresterung, das heißt also durch Kondensationsreaktionen, miteinander verknüpft. Je nach Art, Funktionalität und eingesetzten Anteilen und Verhältnissen der Ausgangskomponenten werden dabei beispielsweise lineare oder verzweigte Produkte erhalten. Während lineare Produkte vornehmlich beim Einsatz von difunktionellen Ausgangskomponenten (Diole, Dicarbonsäuren) entstehen, wird beispielsweise durch den Einsatz von höherfunktionellen Alkoholen (OH-Funktionalität, das heißt Anzahl OH-Gruppen pro Molekül, größer 2) eine Verzweigung erreicht. Natürlich ist bei der Herstellung auch der anteilige Einsatz von monofunktionellen Komponenten, beispielsweise Monocarbonsäuren, möglich. Zur Herstellung von Polyestern können bekanntermaßen auch statt oder neben den entsprechenden organischen Carbonsäuren, die Anhydride der Carbonsäuren, insbesondere die Anhydride der Dicarbonsäuren, eingesetzt werden. Ebenfalls möglich ist die Herstellung durch den Einsatz von Hydroxycarbonsäuren oder den von den Hydroxycarbonsäuren durch intramolekulare Veresterung abgeleiteten Lactonen.

Bevorzugt handelt es sich bei dem zu modifizierenden Polyester um ein Polylactonpolymer, das heißt also ein in der Regel durch ringöffnende Polymerisation von Lactonen wie insbesondere epsilon-Caprolacton hergestelltes Polymer. Dabei werden in der Regel als Starter beziehungsweise Katalysator organische Alkohole, meist Diole, eingesetzt. Das resultierende Polylactonpolymer besitzt dann im Falle des Einsatzes von Diolen zwei endständige Hydroxylgruppen. Jedenfalls aber besitzt das Polymer eine Hydroxylgruppe, die durch die letzte Ringöffnung entsteht. Solche Polyester sind also linear-aliphatische und gesättigte Polyester mit mindestens einer Hydroxylgruppe. Geeignete Lactone zur Herstellung des Polylactonpolymers sind beta-Propiolacton, gamma-Butyrolacton, gamma-Valerolaction, epsilon-Caprolacton oder Methyl-epsilon-caprolacton, vorzugsweise gamma-Butyrolacton und epsilon-Caprolacton, besonders bevorzugt epsilon-Caprolacton. Geeignete Starteralkohole sind Neopentylglykol, Ethylenglykol oder Trimethylolpropan.

Bevorzugt ist der zu modifizierende Polyester demnach ein linear-aliphatischer hydroxylgruppenhaltiger Polyester, darunter bevorzugt ein gesättigter Polyester. Der zu modifizierende Polyester ist ganz besonders bevorzugt ein Polycaprolactonpolymer.

Der Polyester, insbesondere der linear-aliphatische und gesättigte Polyester mit mindestens einer Hydroxylgruppe, besonders bevorzugt das Polycaprolactonpolymer, ist Polyisocyanat-modifiziert und hat einen Isocyanatgehalt von 4 bis 15 %.

Dies bedeutet, dass der wie oben beschriebene zu modifizierende Polyester mit einem Polyisocyanat modifiziert ist, das heißt unter Ausbildung kovalenter Bindungen umgesetzt wird, wobei nach der Reaktion jedoch jedenfalls freie Isocyanatgruppen übrig bleiben. Insbesondere bevorzugt wird ein Diisocyanat zur Modifizierung eingesetzt. Augenscheinlich muss der Polyester also mit Isocyanatgruppen reaktive funktionelle Gruppen enthalten, beispielsweise Hydroxylgruppen- oder Aminogruppen. Aus oben Gesagten folgt, dass es sich dabei bevorzugt um Hydroxylgruppen handelt. Nach der Umsetzung ist das Polyisocyanat in diesem Fall dann über eine Urethangruppe mit dem Polyester verknüpft. Die entsprechenden Reaktionen und Reaktionsbedingungen sind grundsätzlich bekannt.

Als zur Modifizierung einzusetzende Polyisocyanate können die an sich bekannten Verbindungen wie aliphatische und aromatische Polyisocyanate, insbesondere Diisocyanate und deren Dimere und Trimere wie Uretdione und Isocyanurate eingesetzt werden. Beispielhaft sei auf Hexamethylendiisocyanat, Octamethylendiisocyanat, Decamethylendiisocyanat, Dodecamethylendiisocyanat, Tetradecamethylendiisocyanat, Trimethylhexan-diisocyanat, Tetramethylhexandiisocyanat, Isophorondiisocyanat (IPDI), 2-Isocyanato-propylcyclohexyl-isocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan und 2,4- oder 2,6-Diisocyanato-1-methylcyclohexan, Diisocyanate oder Mischungen aus diesen Polyisocyanaten sowie auf die an sich bekannten Dimere und/oder Trimere der genannten Polyisocyanate, das heißt also beispielsweise Uretdione und Isocyanurate der oben genannten Polyisocyanate, verwiesen. Bevorzugt werden aliphatische Polyisocyanate, insbesondere aliphatische Diisocyanate, eingesetzt. Insbesondere bevorzugt werden keine aromatischen Polyisocyanate eingesetzt. Ein besonders bevorzugtes Polyisocyanat ist Hexamethylendiisocyanat (HDI).

Der Polyisocyanat-modifizierte Polyester besitzt einen Isocyanatgehalt von 4 bis 15 %, bevorzugt 5 bis 12 %, insbesondere bevorzugt 6 bis 10 %. Der Isocyanatgehalt wird im Rahmen der vorliegenden Erfindung gemäß DIN EN ISO 11909 durch Umsetzung der jeweiligen Probe mit überschüssigem Dibutylamin und Rücktitration des Überschusses mit Salzsäure gegen Bromphenolblau bestimmt.

Das gewichtsmittlere Molekulargewicht der Komponente (C) liegt beispielsweise im Bereich von 500 bis 10000 g/mol wie insbesondere 1000 bis 4000 g/mol.

Entsprechende Produkte sind im Handel, beispielsweise in lösemittelfreier Form oder als Lösung in an sich bekannten und weiter unten beschriebenen Lösemitteln, erhältlich und können ohne weiteres in der Härterkomponente der erfindungsgemäßen Beschichtungszusammensetzung eingesetzt werden. Beispielhaft sei auf Produkte der Handelsbezeichnung Tolonate™ (Fa. Vencorex), Desmodur® (Fa. Bayer) oder Adiprene® (Fa. Chemtura) verwiesen.

Der Anteil des mindestens einen Polyisocyanat-modifizierten Polyesters (C) liegt vorzugsweise im Bereich von 8 bis 90 Gew.-%, bevorzugt 12 bis 80 Gew.-%, besonders bevorzugt 16 bis 70 Gew.-%, jeweils bezogen auf das Gesamtgewicht der erfindungsgemäßen Beschichtungszusammensetzung.

Als weitere Bestandteile kann die erfindungsgemäße Beschichtungszusammensetzung unterschiedlichste dem Fachmann auf dem Gebiet bekannte Lackkomponenten enthalten.

Bevorzugt ist allerdings, dass die Komponenten (A), (B) und (C) insgesamt einen Anteil von mindestens 50 Gew.-%, insbesondere bevorzugt mindestens 60 Gew-%, bezogen auf das Gesamtgewicht der Beschichtungszusammensetzung, ausmachen.

Die Beschichtungszusammensetzung kann organische Lösemittel und/oder Wasser enthalten. Organische Lösemittel sind aliphatische und/oder aromatische Kohlenwasserstoffe wie Toluol, Xylol, Solventnaphtha, Solvesso 100, oder Hydrosol® (Fa. ARAL), Ketone, wie Aceton, Methylethylketon oder Methylamylketon, Ester, wie Ethylacetat, Butylacetat, Butylglycolacetat, Pentylacetat, Methoxypropylacetat oder Ethylethoxypropionat, Ether, Alkohole, Chlorkohlenwasserstoffe oder Mischungen aus den vorgenannten Lösemitteln.

Es ist aber von besonderem Vorteil, dass das erfindungsgemäße Beschichtungsmittel lösemittelfrei hergestellt werden kann. Die ansonsten enthaltenen Komponenten lassen trotzdem eine wie unten beschriebene Applikation auf ein Substrat zu. Auf diese Weise weist die Beschichtungszusammensetzung insbesondere durch Vermeidung von organischen Lösemitteln auch ein hochwertiges ökologisches Profil auf. Der Ausdruck "lösemittelfrei" ist dem Fachmann grundsätzlich bekannt. Bevorzugt ist darunter zu verstehen, dass die Beschichtungszusammensetzung weniger als 10 Gew.-% organische Lösemittel enthält. Bevorzugt sind weniger als 7,5 Gew.-% organische Lösemittel, insbesondere bevorzugt weniger als 5 Gew.-% organische Lösemittel, ganz besonders bevorzugt weniger als 2,5 Gew.-% organische Lösemittel, vorhanden. Die Angaben beziehen sich jeweils auf das Gesamtgewicht der Beschichtungszusammensetzung. Organische Lösemittel werden also bevorzugt nicht explizit zugegeben, um beispielsweise die Viskosität der Zusammensetzung anzupassen. Sie werden lediglich, wenn überhaupt, durch den Einsatz von beispielsweise typischen Lackadditiven, welche gegebenenfalls in organischen Lösemitteln gelöst kommerziell erworben werden können, in geringen Mengen in der Beschichtungszusammensetzung eingesetzt. Bevorzugt enthält die Beschichtungszusammensetzung auch kein Wasser beziehungsweise nur untergeordnete Mengen an Wasser (wasserfrei). Insbesondere bevorzugt ist weniger als 1,0 Gew.-%, bevorzugt weniger als 0,2 Gew.-%, nochmals bevorzugt weniger als 0,01 Gew.-% Wasser, bezogen auf das Gesamtgewicht der Beschichtungszusammensetzung, enthalten. Es wird also bevorzugt lediglich, wenn überhaupt, durch den Einsatz von beispielsweise typischen Lackadditiven, in der Zusammensetzung eingesetzt.

Die erfindungsgemäße Beschichtungszusammensetzung kann neben dem mindestens einen Polyisocyanat-modifizierten Polyester (C) mit einem Isocyanatgehalt von 4 bis 15 % noch mindestens eine weitere, davon verschiedene Polyisocyanatgruppen enthaltene Komponente enthalten. Bevorzugt ist allerdings, dass die Komponente (C) in einem Anteil von mindestens 30 Gew.-%, insbesondere bevorzugt mindestens 35 Gew-%, bezogen auf die Gesamtmenge der in der Beschichtungszusammensetzung enthaltenen Polyisocyanatgruppen enthaltenen Komponenten, eingesetzt wird.

Als weitere Polyisocyanatgruppen enthaltene Komponenten können die an sich bekannten Polyisocyanate wie aliphatische und aromatische Polyisocyanate, insbesondere Diisocyanate und deren Dimere und Trimere wie Uretdione und Isocyanurate eingesetzt werden. Beispielhaft sei auf Hexamethylendiisocyanat, Octamethylendiisocyanat, Decamethylendiisocyanat, Dodecamethylendiisocyanat, Tetradecamethylendiisocyanat, Trimethylhexan-diisocyanat, Tetramethylhexandiisocyanat, Isophorondiisocyanat (IPDI), 2-Isocyanato-propylcyclohexyl-isocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan und 2,4- oder 2,6-Diisocyanato-1-methylcyclohexan oder Mischungen aus diesen Polyisocyanaten verwiesen. Bevorzugt werden dabei die an sich bekannten Dimere und/oder Trimeren der genannten Polyisocyanate eingesetzt, das heißt also insbesondere die an sich bekannten und auch im Handel erhältlichen Uretdione und Isocyanurate der oben genannten Polyisocyanate. Bevorzugt werden aliphatische Polyisocyanate eingesetzt. Insbesondere bevorzugt werden aliphatische Polyisocyanate eingesetzt. Bevorzugte weitere Polyisocyanate sind Hexamethylendiisocyanat und Isophorondiisocyanat sowie Mischungen hiervon, insbesondere deren unterschiedliche Trimere und Dimere wie Isocyanurate und Uretdione. Die Isocyanatgruppen in diesen Komponenten können frei oder durch bekannte Blockierungsmittel blockiert sein. Bevorzugt sind die Isocyanatgruppen unblockiert (also frei). Dies gilt im Übrigen auch für die oben beschriebene erfindungswesentliche Komponente (C). Die Beschichtungszusammensetzung enthält also bevorzugt ausschließlich Polyisocyanatgruppen enthaltene Komponenten, welche unblockiert sind, wobei diese bevorzugt ausschließlich in der Härterkomponente eingesetzt werden. Die genannten Polyisocyanate sind im Handel erhältlich. Sofern vorhanden, werden die weiteren Polyisocyanate selbstverständlich bevorzugt in der Härterkomponente eingesetzt. Als Polyisocyanat wird eine Verbindung dann bezeichnet, wenn sie im Mittel mehr als eine Isocyanatgruppe pro Molekül enthält.

Die erfindungsgemäße Beschichtungszusammensetzung kann ein Molekularsieb oder mehrere Molekularsiebe enthalten. Molekularsieb ist die Bezeichnung für natürliche oder synthetische Zeolithe. Sie weisen bekanntermaßen eine vergleichsweise hohe innere Oberfläche (ca. 600 bis 700 m²/g) und einheitliche Porendurchmesser auf. Dadurch ergibt sich ein relativ starkes Adsorptionsvermögen. Vorzugsweise enthält die Beschichtungszusammensetzung 1 bis 10 Gew.-%, bezogen auf das Gesamtgewicht der Zusammensetzung, mindestens eines Molekularsiebs. Geeignete Molekularsiebe weisen eine Porengröße von 2 bis 10, vorzugsweise 3 bis 4 Angström auf. Beispielsweise können hochporöse Aluminiumsilicate mit einer Porengröße von 3 Angström eingesetzt werden.

Die erfindungsgemäße Beschichtungszusammensetzung kann Katalysatoren für die Katalyse der Reaktion von Hydroxylgruppen und Aminogruppen mit Isocyanatgruppen enthalten. Vorzugsweise enthält die Beschichtungszusammensetzung 0,01 bis 2 Gew.-%, bezogen auf das Gesamtgewicht der Zusammensetzung, mindestens eines Katalysators. Bevorzugt enthält die erfindungsgemäße Beschichtungszusammensetzung 0,02 bis 1 Gew.-%, jeweils bezogen auf das Gesamtgewicht der Zusammensetzung, mindestens eines Katalysators. Geeignete Katalysatoren sind die bekannten Metallkatalysatoren wie beispielsweise Zinn-, Molybdän-, Zirkon oder Zinkkatalysatoren sowie aminische Katalysatoren wie zum Beispiel 2-(2-Dimethylamino-ethoxy)ethanol. Besonders geeignete Katalysatoren sind Zinnverbindungen wie Dimethylzinndilaurat oder Dibutylzinndilaurat, die, wie alle vorgenannten Katalysatoren, eine Reaktion zwischen Isocyanatgruppen-haltigen Verbindungen (C) und den hydroxylgruppen- und amingruppenhaltigen Komponenten (A) und (B) katalysieren.

Schließlich können die erfindungsgemäßen Beschichtungsmittelzusammensetzungen auch noch weitere von den bereits beschriebenen Komponenten verschiedene Bestandteile enthalten. Diese Bestandteile umfassen hierbei beispielsweise typische Lackadditive wie Antioxidantien, Entlüftungsmittel, Netzmittel, Dispergiermittel, Verlaufmittel und Entschäumer, beispielsweise solche auf Polysiloxanbasis, Haftvermittler, beispielsweise solche auf Silanbasis, Rheologiehilfsmittel wie Verdickungsmittel, Antiablaufmittel und Thixotropiermittel, Wachse und wachsartige Verbindungen, Biozide, Mattierungsmittel, Radikalfänger, Lichtschutzmittel, vorzugsweise UV-Absorber mit einem Absorptionsmaximum unter 370 nm und/oder sterisch gehinderte Amine (HALS), Korrosionsinhibitoren, Flammschutzmittel oder Polymerisationsinhibitoren, aber auch lösliche Farbstoffe, Pigmente sowie weitere Füllstoffe oder Katalysatoren. Der Anteil solcher Bestandteile liegt in den hierfür gängigen Bereichen von beispielsweise 0,1 bis 20 Gew.-%, bezogen auf die Gesamtmenge der Beschichtungszusammensetzung.

Der Festkörpergehalt der Beschichtungszusammensetzungen kann je nach den Erfordernissen des Einzelfalls variieren, wobei es allerdings von besonderem Vorteil ist, dass die Zusammensetzung lösemittel- und wasserfrei hergestellt werden kann und trotzdem auf wie unten beschriebene Weise appliziert werden kann. Vorzugsweise liegt der Festkörpergehalt der erfindungsgemäßen Beschichtungszusammensetzung demzufolge bei größer 80 %, besonders bevorzugt bei größer 85 % und ganz besonders bevorzugt bei 90 bis 98 Gew.-%.

Unter Festkörpergehalt (nicht-flüchtiger Anteil) ist derjenige Gewichtsanteil zu verstehen, der unter festgelegten Bedingungen beim Eindampfen als Rückstand verbleibt. In der vorliegenden Anmeldung wird der Festkörper nach DIN EN ISO 3251 bestimmt. Dazu wird die Zusammensetzung für 60 Minuten bei 130°C eingedampft.

Diese Prüfmethode kann, sofern nicht anders angegeben, ebenfalls angewandt werden, um beispielsweise den Anteil verschiedener Komponenten beziehungsweise Bestandteile der Beschichtungszusammensetzung, beispielsweise eines Polycarbonatdiols, am Gesamtgewicht der Zusammensetzung festzulegen beziehungsweise vorzubestimmen. Es kann also der Festkörper einer Dispersion einer Komponente, welche der Zusammensetzung zugegeben werden soll, bestimmt werden. Durch Berücksichtigung des Festkörpers der Dispersion und der in der Zusammensetzung eingesetzten Menge der Dispersion kann dann der Anteil der Komponente an der Gesamtkomposition ermittelt beziehungsweise festgelegt werden. Diese Bestimmungsmethode kann natürlich auch erfolgen, wenn beispielsweise ein Bestandteil kommerziell erworben wird und vom Vertreiber als lösemittel- oder wasserfrei bezeichnet wird. In diesem Fall wird der Festkörper des einzusetzenden Handelsprodukts beispielsweise annähernd 100 % betragen.

In einer bevorzugten Ausführungsform umfasst die erfindungsgemäße Beschichtungszusammensetzung
(1) in der Stammlackkomponente
   (A) 20,0 bis 50,0 Gew.-% mindestens eines Polycarbonatdiols,
   (B) 1,0 bis 7,0 Gew.-% mindestens eines sekundäre Aminogruppen aufweisenden Diamins mit einer aliphatischen Gruppe (b1) zwischen den Stickstoffatomen der Aminogruppen
   sowie
(2) in der Härterkomponente
   (C) 16 bis 70 Gew.-% mindestens eines Polyisocyanat-modifizierten Polyesters mit einem Isocyanatgehalt von 4 bis 15 %,
   wobei die Gewichtsangaben jeweils auf das Gesamtgewicht der Beschichtungszusammensetzung bezogen sind.

Innerhalb dieser bevorzugten Ausführungsform sind selbstverständlich alle weiter oben beschriebenen vorteilhaften Varianten, beispielsweise hinsichtlich der Komponenten (A) bis (C) ebenfalls als vorteilhaft anzusehen. Dies gilt für die Kombination der bevorzugten Ausführungsform mit nur einer oder auch mehreren der oben beschriebenen vorteilhaften Varianten.

Bevorzugt ist, dass das Verhältnis der molaren Gesamtmenge von Hydroxylgruppen und Aminogruppen in der Stammlackkomponente zu der molaren Menge an Isocyanatgruppen in der Härterkomponente von 1,0/0,9 bis 1,0/1,5 liegt. Besonders bevorzugt ist demnach, dass das Verhältnis der molaren Gesamtmenge von Hydroxylgruppen der Komponente (A) und Aminogruppen der Komponente (B) in der Stammlackkomponente zu der molaren Menge an Isocyanatgruppen in der Härterkomponente den genannten Wert einnimmt.

Bevorzugt ist, dass von den genannten Bestandteilen (A), (B), und (C) jeweils genau ein Bestandteil in der Beschichtungszusammensetzung enthalten ist.

Alle angegebenen bevorzugten Ausführungsformen sind für sich genommen und in Kombination mit allen weiteren bevorzugten Ausgestaltungen als bevorzugt anzusehen. Die bevorzugten Ausführungsformen gelten nicht nur für die erfindungsgemäße Beschichtungszusammensetzung, sondern auch für die in der Folge beschriebenen Gegenstände, beispielsweise ein Verfahren, in dem die Beschichtungszusammensetzung eingesetzt wird.

Im Falle einer möglichen Spezifizierung auf Beschichtungszusammensetzungen enthaltend bevorzugte Komponenten, beispielsweise bevorzugte Diamine (B), in einem speziellen Anteilsbereich gilt folgendes. Die Diamine (B), die nicht in die bevorzugte Gruppe fallen, können selbstverständlich weiterhin in der Beschichtungszusammensetzung enthalten sein. Der spezielle Anteilsbereich gilt dann nur für die bevorzugte Gruppe von Diaminen. Bevorzugt ist allerdings, dass für den Gesamtanteil von Diaminen bestehend aus Diaminen aus der bevorzugten Gruppe und Diaminen (B), die nicht in die bevorzugte Gruppe fallen, ebenfalls der spezielle Anteilsbereich gilt.

Würde also eine Beschränkung auf einen Anteilsbereich von 1,0 bis 7,0 Gew.-% und eine bevorzugte Gruppe von Diaminen durchgeführt werden, so gilt dieser Anteilsbereich augenscheinlich zunächst nur für die bevorzugte Gruppe an Diaminen. Bevorzugt wäre dann aber, dass insgesamt von allen ursprünglich umfassten Diaminen (B) bestehend aus Diaminen aus der bevorzugten Gruppe und Diaminen (B), die nicht in die bevorzugte Gruppe fallen, ebenfalls von 1,0 bis 7,0 Gew.-% enthalten sind. Werden also 5,0 Gew.-% von Diaminen der bevorzugten Gruppe eingesetzt, so können höchstens 2,0 Gew.-% der Diamine (B) der nicht bevorzugten Gruppe eingesetzt werden.

Das genannte Prinzip gilt im Rahmen der vorliegenden Erfindung für alle genannten Komponenten der Beschichtungszusammensetzung und deren Anteilsbereiche.

Die vorliegende Erfindung betrifft auch ein Verfahren zur Herstellung der erfindungsgemäßen Beschichtungszusammensetzung. Die Herstellung dieser kann unter Einsatz der üblichen und bekannten Mischverfahren und Mischaggregate wie Rührkesseln, Rührwerksmühlen, Extrudern oder Knetern erfolgen. Dabei ist zu beachten, dass es sich bei der erfindungsgemäßen Beschichtungszusammensetzung um eine Zweikomponenten-Zusammensetzung handelt und die Stammlackkomponente sowie die Härterkomponente getrennt voneinander hergestellt und gelagert werden und dann, wie oben beschrieben, erst kurz vor der Applikation der Beschichtungszusammensetzung zusammengegeben und gemischt werden. Die Stammlackkomponente umfasst dabei in der Regel neben den erfindungswesentlichen Bestandteilen (A) und (B) die gegebenenfalls vorhandenen Zusatzstoffe beziehungsweise Lackadditive. Dieser Stammlackkomponente wird dann die Härterkomponente, welche neben dem erfindungswesentlichen Bestandteil (C) noch weitere Polyisocyanate enthalten kann, kurz vor der Applikation der Beschichtungszusammensetzung auf ein Substrat beigemischt.

Ein weiterer Gegenstand der vorliegenden Erfindung betrifft eine aus der erfindungsgemäßen Beschichtungszusammensetzung hergestellte Beschichtung sowie ein Verfahren zur Herstellung solcher Beschichtungen.

Das Verfahren zur Herstellung einer Beschichtung umfasst die Applikation der Beschichtungszusammensetzung auf ein Substrat. Die Applikation kann über die üblichen Verfahren wie Spritzen (beispielsweise. Airless, Airmix, Druckluft, Heißspritzverfahren oder Induktionsvermischung), Walzen, Rollen, Streichen, Gießen oder über eine Kartusche erfolgen. Vorzugsweise wird die Beschichtungszusammensetzung durch Streichen oder Spritzen aufgebracht.

Um eine gehärtete Beschichtung herzustellen, wird die aufgebrachte Beschichtungszusammensetzung nach der Applikation gehärtet. Vorzugsweise erfolgt die Härtung thermisch. Die applizierte Beschichtungszusammensetzung beziehungsweise die Beschichtung bestehend aus der Zusammensetzung wird dabei bevorzugt Temperaturen von nicht mehr als 80°C, bevorzugt nicht mehr als 60°C ausgesetzt. Besonders bevorzugt ist ein Temperaturbereich von 15 bis 60 °C, ganz besonders von 15 bis 50 °C.

Die Zeitdauer, die für eine vollständige Härtung benötigt wird, kann je nach gewählter Härtungstemperatur stark variieren und liegt beispielsweise im Bereich von 30 min bis 10 Tagen. Beispielsweise kann für eine Dauer von 30 min bei 40°C bis 60°C gehärtet werden oder aber bei nur 15 bis 25°C für eine Dauer von 7 Tagen gehärtet werden.

Bei oder vor der Härtung können auch übliche thermische Härtungsvorrichtungen und/oder Konvektionsverfahren angewandt werden, beispielsweise Durchlauföfen, NIR- und IR- Heizstrahler, Gebläse und Blastunnel. Diese Vorrichtungen können auch miteinander kombiniert werden. Dabei kann eine durch die Temperatur gesteuerte Härtung durch Konvektion unterstützt werden.

Die Beschichtungen können jeweils eine Trockenfilmschichtdicke von beispielsweise 100 bis 500 µm, vorzugsweise von 150 bis 400 µm aufweisen.

Die erfindungsgemäßen Beschichtungen können auf an sich beliebigen Substraten durch Applikation einer erfindungsgemäßen Beschichtungszusammensetzung auf das Substrat hergestellt werden. Die Substrate können aus den unterschiedlichsten Materialien und Kombinationen von Materialien aufgebaut sein. Vorzugsweise bestehen sie aus Metallen wie Stahl oder Aluminium sowie Kunststoffen wie epoxidharzbasierten Kunststoffen, die glasfaser- (GFK), aramidfaser- (AFK) und/oder kohlefaserverstärkt (CFK) oder beispielsweise mit Hanf oder Sisal naturfaserverstärkt sein können und/oder Glas. Bevorzugte Substrate sind glasfaserverstärkte Epoxidharz-Kunststoffe. Die Substrate können beliebige Größen und Formen aufweisen.

Von Vorteil ist aber, dass gerade sehr große Substrate wie beispielsweise Rotorblätter ohne besondere verfahrenstechnische Schwierigkeiten beschichtet werden können. Denn die erfindungsgemäße Beschichtungszusammensetzung kann bei Raumtemperatur (das heißt 15 bis 25°C) gehärtet werden, sodass keine explizite Zuführung von Wärme, das heißt thermischer Energie, im Rahmen einer komplexen Anlagentechnik notwendig ist, um eine gehärtete Beschichtung herzustellen. Aus einer zunächst durch die Applikation der Beschichtungszusammensetzung hergestellten Beschichtung entsteht also durch einfache Lagerung bei Raumtemperatur schließlich eine gehärtete Beschichtung.

Aufgrund der sehr guten Erosionsbeständigkeit der Beschichtungen sind bevorzugte Substrate solche, die die der Regen- oder Sanderosion besonders stark ausgesetzt sind. Als Substrate können Rotorblätter, Luft- oder Landfahrzeuge, Schiffe, Bauwerke oder Pipelines in Frage kommen. Bevorzugte Substrate sind Rotorblätter von Windenergieanlagen, Hubschraubern oder Schiffsschrauben sowie Luftfahrzeuge wie beispielsweise Flugzeuge. Insbesondere sind Rotorblätter von Windenergieanlagen und Flugzeuge geeignete Substrate.

Aus oben Gesagten folgt, das auch ein Substrat, das mit einer erfindungsgemäßen Beschichtung beschichtet ist, Gegenstand der vorliegenden Erfindung ist. Genauso folgt aus oben Gesagten, dass auch die Verwendung der erfindungsgemäßen Beschichtungszusammensetzung sowie die Verwendung einer erfindungsgemäßen Beschichtung zur Verbesserung der Erosionsbeständigkeit von Substraten, insbesondere den oben genannten Substraten, Gegenstand der vorliegenden Erfindung sind.

Möglich ist auch, dass unter Einsatz einer erfindungsgemäßen Beschichtungszusammensetzung eine Mehrschichtbeschichtung hergestellt wird. Auch eine solche Mehrschichtbeschichtung ist Gegenstand der vorliegenden Erfindung. Die aus der Beschichtungszusammensetzung hergestellte Beschichtung ist also in einer Mehrschichtbeschichtung enthalten. Bevorzugt sind Mehrschichtbeschichtungen, in denen eine erfindungsgemäße Beschichtung die Deckbeschichtung darstellt. Auf diese Weise wird ein technischer Effekt der erfindungsgemäßen Beschichtung, nämlich die hervorragende Erosionsbeständigkeit, optimal ausgenutzt. Dies bedeutet, dass alle weiteren Beschichtungsschichten unterhalb der erfindungsgemäßen Beschichtung und damit zwischen dem Substrat und der erfindungsgemäßen Beschichtung angeordnet sind. Ein Substrat, das mit einer erfindungsgemäßen Beschichtung beschichtet ist, muss also nicht in direktem Kontakt mit dieser Beschichtung stehen. Dazwischen können weitere Schichten, beispielsweise zumindest eine an sich bekannte Füllerschicht, angeordnet sein.

Die erfindungsgemäße Beschichtungszusammensetzung eignet sich insbesondere zur Beschichtung von Ecken und Kanten, insbesondere Kanten, von Substraten. Die Verwendung der erfindungsgemäßen Beschichtungszusammensetzung sowie die Verwendung einer erfindungsgemäßen Beschichtung zur Verbesserung des Kantenschutzes ist also auch Gegenstand der vorliegenden Erfindung. Gerade Kanten von Substraten, beispielsweise den oben genannten Substraten, sind im Gebrauch erodierenden Einflüssen besonders stark ausgesetzt.

In der Folge wird die vorliegende Erfindung anhand von Beispielen erläutert.

### Beispiele

### 1. Prüfmethoden

### 1.1 Allgemeines

Zur labortechnischen Bestimmung der Erosionsbeständigkeit können generell unterschiedliche Gerätschaften verwendet werden, bei denen entweder das zu erodierende beschichtete Substrat durch das Erosionsmedium bewegt wird oder das Substrat feststeht und vom Erosionsmedium umströmt wird. Ein feststehender Prüfkörper kann beispielsweise durch eine Hochdruck-Wasserstrahl-Technik, welche beispielsweise. beim Wasserstrahlschneiden verwendet wird, getestet werden. Die Erosionswirkung wird gesteuert durch Wasserdruck, Abstand zum Werkstück sowie Düsengröße und -art. Durch die Mitverwendung von Sand, Korund oder Siliziumcarbid kann die Wirkung weiter verstärkt werden. Weiterhin ist Sandstrahlen oder Dampfstrahlen denkbar, wobei ebenfalls durch den anliegenden Druck, Düsengröße und Abstand zum Werkstück die Erosionswirkung variiert und den Realbedingungen angepasst werden kann.

Beim Regenerosionstest für bewegte Prüfkörper wird das zu erodierende beschichtete Substrat an einem Rotor oder einer Scheibe befestigt und durch die erzeugte Radialgeschwindigkeit durch einen Vorhang aus Wassertropfen oder Gemischen mit Salz oder Sand bewegt. Das derzeit gängigste Prüfszenario, welches beispielsweise im Bereich der Windenergie verwendet wird, arbeitet bei Geschwindigkeiten von 140 m/s und einer Regenmenge von 30 l/h. Im Bereich der Flugzeugindustrie werden Geschwindigkeiten von bis zu 220 m/s bei vergleichbarer Regenmenge geprüft. Die Prüfungen zur Regenerosionsbeständigkeit können nach der Norm ASTM G 73 erfolgen. Die unter diese Norm fallenden Aufbauten sind individuell und können über Standards miteinander verglichen werden.

Den genannten Prüfmöglichkeiten ist gemein, dass reale Geschwindigkeiten, wie beispielsweise Umfangsgeschwindigkeiten von Rotorblättern oder Reisefluggeschwindigkeiten von Flugzeugen simuliert werden und die Schadensbilder den real auftretenden Schadensbildern ähnlich sind.

### 1.2 Testbedingungen

Im Rahmen der Beispiele erfolgte die Prüfung der Regenerosionsbeständigkeit nach der Norm ASTM G 73. Die Tests wurden auf einem hauseigenen Regenerosions-Prüfstand durchgeführt. Die Prüfkörper werden in bestimmten Zeitabständen (15 Minuten) bei definierter Geschwindigkeit (140 m/s) durch einen Tropfenvorhang geschleudert. Die Regenmenge wird dabei durch die angelegte Durchflussrate ebenfalls konstant gehalten (30 l/h). Die Tropfengrößen des angelegten "Regens" betragen dabei durchschnittlich 5-6 mm. Die Prüfungen erfolgen bei einer Temperatur von 20 bis 25 °C. Die Auswertung erfolgt visuell. Die Erosionsbeständigkeit entspricht der Zeit bis zum ersten Durchscheinen des Substrates.

### 2. Herstellung von Beschichtungszusammensetzungen und gehärteten Beschichtungen

Die Stammlackkomponenten und Härterkomponenten unterschiedlicher Beschichtungszusammensetzungen (E = Erfindungsgemäß, V = Vergleich) wurden durch Zusammengeben der jeweiligen Bestandteile und homogene Vermischung in einem Dissolver hergestellt (Tabelle 1).

**Tabelle 1**

| **Bestandteil** | Gewichtsteile | | |
|---|---|---|---|
| | **E1** | **E2** | **V1** |
| **Stammlackkomponente** | | | |
| | | | |
| Lineares, aliphatisches Polycarbonatdiol (A) mit endständigen Hydroxylgruppen, lösemittelfrei, OH Zahl = 225 | | 77,0 | |
| Lineares, aliphatisches Polycarbonatdiol (A) mit endständigen Hydroxylgruppen, lösemittelfrei, OH Zahl = 172 | 82,0 | | |
| Diamin (B)¹ (Aminzahl = 415) | 7,2 | 6,0 | |
| Mischung von Polyesterpolyolen, | | | 58,5 |
| Additivmischung | 4,0 | 8,0 | 1,2 |
| Molekularsieb | 3,0 | 4,0 | 3,5 |
| Farbpigment | 3,8 | 5,0 | 5,8 |
| Füllstoff | | | 31,0 |
| | | | |
| **Summe** | **100** | **100** | **100** |
| | | | |

| **Härterkomponente** | | | |
|---|---|---|---|
| Aliphatischer HDI-modifizierter Polyester (C) mit einem Isocyanatgehalt von 8,4 % | 38,8 | 180 | |
| Mischung von HDI- und IPDI-basierten Polyisocyanaten (Isocyanatgehalt 21 %) | 58,2 | | |
| HDI-basiertes Polyisocyanat (Isocyanatgehalt 21,8 %) | | | 74,0 |
| | | | |
| **Summe** | **97** | **180** | **74** |

| | | | |
|---|---|---|---|
| ¹ Additionsprodukt aus einem Äquivalent Isophorondiamin und 2 Äquivalenten Acrylnitril. | | | |

Anschließend wurden die jeweiligen Stammlackkomponenten mit den jeweiligen Härterkomponenten in den in der Tabelle angegebenen Mengenverhältnissen homogen vermischt und direkt auf einen mit einem handelsüblichen polyharnstoffbasierten Porenfüller vorbeschichteten Epoxidharz-Prüfkörper appliziert (Streichapplikation). Die Härtung erfolgte durch Lagerung über einen Zeitraum von sieben Tagen bei 20 bis 25°C. Die Trockenschichtdicke betrug 300 Mikrometer.

Als weitere Vergleichszusammensetzung beziehungsweise Vergleichsmehrschichtbeschichtung wurde das Beispiel 2 der WO 2012/032113 herangezogen (V2). Anschließend wurden die auf dem Substrat angeordneten Mehrschichtbeschichtungen hinsichtlich der Regenerosionsbeständigkeit untersucht (Tabelle 2).

**Tabelle 2**

| | **E1** | **E2** | **V1** | **V2** |
|---|---|---|---|---|
| Dauer Regenerosionstest | 900 Minuten | 1000 Minuten | 60 Minuten | 160 Minuten |

Es zeigt sich, dass die auf dem Substrat angeordneten Mehrschichtbeschichtungen, die eine erfindungsgemäße Beschichtung als Deckbeschichtung enthalten, eine sehr gute Erosionsbeständigkeit aufweisen. Die Beständigkeit ist zudem deutlich besser als bei Mehrschichtbeschichtungen, bei deren Herstellung keine erfindungsgemäße Beschichtungszusammensetzung eingesetzt wurde.

## Patentansprüche

1. Zweikomponenten-Beschichtungszusammensetzung umfassend
(1) eine Stammlackkomponente umfassend
(A) mindestens ein Polycarbonatdiol,
(B) mindestens ein sekundäre Aminogruppen aufweisendes Diamin mit einer aliphatischen Gruppe (b1) zwischen den Stickstoffatomen der Aminogruppen.
sowie
(2) eine Härterkomponente umfassend
(C) mindestens einen Polyisocyanat-modifizierten Polyester mit einem Isocyanatgehalt von 4 bis 15 %.

2. Zweikomponenten-Beschichtungszusammensetzung nach Anspruch 1, **dadurch gekennzeichnet, dass** das mindestens eine Polycarbonatdiol (A) eine OH-Zahl von 50 bis 500 mg KOH/g aufweist.

3. Zweikomponenten-Beschichtungszusammensetzung nach Anspruch 1 oder 2, **dadurch gekennzeichnet, dass** das mindestens eine Polycarbonatdiol (A) ein aliphatisches und lineares Polycarbonatdiol ist.

4. Zweikomponenten-Beschichtungszusammensetzung nach einem der Ansprüche 1 bis 3, **dadurch gekennzeichnet, dass** das mindestens eine Diamin (B) eine Aminzahl von 300 bis 500 mg KOH/g aufweist.

5. Zweikomponenten-Beschichtungszusammensetzung nach einem der Ansprüche 1 bis 4, **dadurch gekennzeichnet, dass** die aliphatische Gruppe (b1) des Diamins (B) cycloaliphatisch ist.

6. Zweikomponenten-Beschichtungszusammensetzung nach einem der Ansprüche 1 bis 4, **dadurch gekennzeichnet, dass** das Diamin (B) die folgende Formel (II) hat:
(b2)-NH-(b1)-NH-(b2) (II)
mit
(b1) = aliphatische Gruppe mit 4 bis 30 Kohlenstoffatomen, insbesondere bevorzugt cycloaliphatische Gruppe mit 6 bis 18 Kohlenstoffatomen,
(b2) = unabhängig voneinander, -CH₂CH₂-CN und/oder -CH₂CH₂-C(O)-O-CₙH₂ₙ₊₁ mit n = 1 bis 6, bevorzugt -CH₂CH₂-CN.

7. Zweikomponenten-Beschichtungszusammensetzung nach einem der Ansprüche 1 bis 6, **dadurch gekennzeichnet, dass** der Polyisocyanat-modifizierte Polyester (C) ein Hexamethylendiisocyanat-modifizierter Polyester ist.

8. Zweikomponenten-Beschichtungszusammensetzung nach einem der Ansprüche 1 bis 7, **dadurch gekennzeichnet, dass** der modifizierte Polyester (C) durch Umsetzung von Hexamethylendiisocyanat mit einem hydroxyfunktionellen aliphatischen Polyester herstellbar ist.

9. Zweikomponenten-Beschichtungszusammensetzung nach Anspruch 8, **dadurch gekennzeichnet, dass** der für die Umsetzung eingesetzte hydroxyfunktionelle aliphatische Polyester ein Polycaprolactonpolymer ist.

10. Verfahren zur Herstellung einer Beschichtung auf einem Substrat umfassend die Applikation einer Beschichtungszusammensetzung gemäß einem der Ansprüche 1 bis 9 auf ein Substrat.

11. Verfahren nach Anspruch 10, **dadurch gekennzeichnet, dass** die durch Applikation hergestellte Beschichtung bei einer Temperatur von nicht mehr als 80°C, bevorzugt 15 bis 60°C, gehärtet wird.

12. Beschichtung, herstellbar nach einem Verfahren gemäß einem der Ansprüche 10 oder 11.

13. Mehrschichtbeschichtung, die eine Beschichtung nach Anspruch 12 als Deckbeschichtung umfasst.

14. Substrat, das mit einer Beschichtung gemäß Anspruch 12 und/oder einer Mehrschichtbeschichtung nach Anspruch 13 beschichtet ist.

15. Verwendung einer Beschichtung gemäß Anspruch 12 oder 13 zur Verbesserung der Erosionsbeständigkeit von Substraten.

## Claims

1. Two-component coating composition comprising
(1) a paint base component comprising
(A) at least one polycarbonate diol,
(B) at least one diamine comprising secondary amino groups and having an aliphatic group (b1) between the nitrogen atoms of the amino groups,
and
(2) a hardener component comprising
(C) at least one polyisocyanate-modified polyester having an isocyanate content of 4% to 15%.

2. Two-component coating composition according to Claim 1, **characterized in that** said at least one polycarbonate diol (A) has an OH number of 50 to 500 mg KOH/g.

3. Two-component coating composition according to Claim 1 or 2, **characterized in that** said at least one polycarbonate diol (A) is an aliphatic and linear polycarbonate diol.

4. Two-component coating composition according to any of Claims 1 to 3, **characterized in that** said at least one diamine (B) has an amine number of 300 to 500 mg KOH/g.

5. Two-component coating composition according to any of Claims 1 to 4, **characterized in that** the aliphatic group (b1) of the diamine (B) is cycloaliphatic.

6. Two-component coating composition according to any of Claims 1 to 4, **characterized in that** the diamine (B) has the following formula (II):
(b2)-NH-(b1)-NH-(b2) (II)
where
(b1) = aliphatic group having 4 to 30 carbon atoms, especially preferably cycloaliphatic group having 6 to 18 carbon atoms,
(b2) = independently at each occurrence, -CH₂CH₂-CN and/or -CH₂CH₂-C(O)-O-CₙH₂ₙ₊₁ with n = 1 to 6, preferably -CH₂CH₂-CN.

7. Two-component coating composition according to any of Claims 1 to 6, **characterized in that** the polyisocyanate-modified polyester (C) is a hexamethylene diisocyanate-modified polyester.

8. Two-component coating composition according to any of Claims 1 to 7, **characterized in that** the modified polyester (C) is preparable by reacting hexamethylene diisocyanate with a hydroxy-functional aliphatic polyester.

9. Two-component coating composition according to Claim 8, **characterized in that** the hydroxy-functional aliphatic polyester used for the reaction is a polycaprolactone polymer.

10. Method for producing a coating on a substrate, comprising the application of a coating composition according to any of Claims 1 to 9 to a substrate.

11. Method according to Claim 10, **characterized in that** the coating produced by application is cured at a temperature of not more than 80°C, preferably 15 to 60°C.

12. Coating producible by a method according to either of Claims 10 and 11.

13. Multicoat coating which comprises as topcoat a coating according to Claim 12.

14. Substrate coated with a coating according to Claim 12 and/or with a multicoat coating according to Claim 13.

15. Use of a coating according to Claim 12 or 13 for improving the erosion resistance of substrates.

## Revendications

1. Composition de revêtement bicomposante, comprenant :
(1) un composant vernis de base, comprenant :
(A) au moins un polycarbonate-diol,
(B) au moins une diamine comprenant des groupes amino secondaires un groupe aliphatique (b1) entre les atomes d'azote des groupes amino, ainsi que
avec
(2) un composant agent de durcissement comprenant :
(C) au moins un polyester modifié avec du polyisocyanate ayant une teneur en isocyanate de 4 à 15 %.

2. Composition de revêtement bicomposante selon la revendication 1, **caractérisée en ce que** ledit au moins un polycarbonate-diol (A) présente un indice OH de 50 à 500 mg de KOH/g.

3. Composition de revêtement bicomposante selon la revendication 1 ou 2, **caractérisée en ce que** ledit au moins un polycarbonate-diol (A) est un polycarbonate-diol aliphatique et linéaire.

4. Composition de revêtement bicomposante selon l'une quelconque des revendications 1 à 3, **caractérisée en ce que** ladite au moins une diamine (B) présente un indice d'amine de 300 à 500 mg de KOH/g.

5. Composition de revêtement bicomposante selon l'une quelconque des revendications 1 à 4, **caractérisée en ce que** le groupe aliphatique (b1) de la diamine (B) est cycloaliphatique.

6. Composition de revêtement bicomposante selon l'une quelconque des revendications 1 à 4, **caractérisée en ce que** la diamine (B) a la formule (II) suivante :
(b2)-NH-(b1)-NH-(b2) (II)
dans laquelle
(b1) = groupe aliphatique de 4 à 30 atomes de carbone, de manière notamment préférée groupe cycloaliphatique de 6 à 18 atomes de carbone,
(b2) = indépendamment les uns des autres, -CH₂CH₂-CN et/ou -CH₂CH₂-C(O)-O-CₙH₂ₙ₊₁ avec n = 1 à 6, de préférence -CH₂CH₂-CN.

7. Composition de revêtement bicomposante selon l'une quelconque des revendications 1 à 6, **caractérisée en ce que** le polyester modifié par du polyisocyanate (C) est un polyester modifié par du diisocyanate d'hexaméthylène.

8. Composition de revêtement bicomposante selon l'une quelconque des revendications 1 à 7, **caractérisée en ce que** le polyester modifié (C) peut être fabriqué par mise en réaction de diisocyanate d'hexaméthylène avec un polyester aliphatique à fonction hydroxy.

9. Composition de revêtement bicomposante selon la revendication 8, **caractérisée en ce que** le polyester aliphatique à fonction hydroxy utilisé pour la réaction est un polymère de polycaprolactone.

10. Procédé de fabrication d'un revêtement sur un substrat, comprenant l'application d'une composition de revêtement selon l'une quelconque des revendications 1 à 9 sur un substrat.

11. Procédé selon la revendication 10, **caractérisé en ce que** le revêtement fabriqué par l'application est durci à une température inférieure ou égale à 80 °C, de préférence de 15 à 60 °C.

12. Revêtement, pouvant être fabriqué par un procédé selon l'une quelconque des revendications 10 ou 11.

13. Revêtement multicouche, qui comprend un revêtement selon la revendication 12 en tant que revêtement supérieur.

14. Substrat, qui est revêtu avec un revêtement selon la revendication 12 et/ou un revêtement multicouche selon la revendication 13.

15. Utilisation d'un revêtement selon la revendication 12 ou 13 pour améliorer la résistance à l'érosion de substrats.
